# EUROPEAN PATENT SPECIFICATION

(11) **EP 3 324 155 B1**
(45) Date of publication and mention of the grant of the patent: **11.08.2021**
(21) Application number: 17201057.1
(22) Date of filing: 10.11.2017
(51) Int. Cl.: G01D 18/00, G01F 3/00, G01F 15/00, G01D 4/00

(54) **MODULAR METERING SYSTEM**
MODULARES MESSSYSTEM
SYSTÈME DE MESURE MODULAIRE

(30) Priority: 20.11.2016 US 201615356594
(43) Date of publication of application: 23.05.2018
(73) Proprietor: Dresser, LLC, New Castle County, Delaware 19801 (US)
(72) Inventor: ARTIUCH, Roman Leon, Houston, TX 77041 (US)
(74) Representative: Chas. Hude A/S

(56) References cited:
- EP-A1- 2 080 999
- EP-A1- 2 543 974
- KR-B1- 101 251 593
- US-A1- 2011 004 446
- US-A1- 2011 224 935
- US-A1- 2015 233 731
- US-A1- 2016 290 838

## Description

### BACKGROUND

Engineers expend great efforts to make devices easy to assemble, reliable to operate, and amenable to maintenance and repair tasks. Hardware constraints can frustrate these efforts because the hardware lacks appropriate functionality and because any improvements can increase costs and/or add complexity to the device. In metrology hardware (e.g., gas meters), the constraints may result from "legal metrology" standards that regulatory bodies promulgate under authority or legal framework of a given country or territory. These standards may be in place to protect public interests, for example, to provide consumer protections for metering and billing use of fuel. These protections may set definitions for units of measure, realization of these units of measure in practice, application of traceability for linking measurement of the units made in practice to the standards and, importantly, ensure accuracy of measurements.

EP 2 080 999 relates to flow meter diagnostic processing. KR 10-1251593 relates to verifying a temperature-pressure compensation device of a gas meter.

US2016290838 discloses a mobile device and method for meter configuring and data collection.

### SUMMARY

The subject matter of this disclosure relates to metrology. Of particular interest herein are improvements that configure a metering system to perform *in situ* verification of components. These improvements, in turn, may permit the metering system to integrate components that are approved (or certified) to meet legal metrology standards separately or independently from the metering system. The *in situ* verification process may result in a "modular" structure for components to "swap" into and out of the metering system. This feature may reduce costs of manufacture, as well as to simplify tasks to expand or modify functionality of the measurement system in the field, while ensuring that the measurement system still meets legal metrology standards.

The invention is as defined in the claims.

### BRIEF DESCRIPTION OF THE DRAWINGS

Reference is now made briefly to the accompanying figures, in which:
FIG. 1 depicts a schematic diagram of an exemplary embodiment of a metering system;
FIG. 2 illustrates a schematic diagram of an example of the metering system 100;
FIG. 3 depicts a flow diagram of an exemplary embodiment of a method for in situ commissioning processes for use to integrate devices of the metering system of FIGS. 1 and 2; and
FIG. 4 depicts a flow diagram of an example of the method of FIG. 3;
FIG. 5 depicts a schematic diagram of an exemplary topology for the metering system of FIGS. 1 and 2;
FIG. 6 depicts a schematic diagram of an exemplary topology for a meter for use in the metering system of FIG. 5;
FIG. 7 depicts a schematic diagram of an exemplary topology for a meter for use in the metering system of FIG. 5;
FIG. 8 depicts a schematic diagram of an exemplary topology for a measuring device for use in the metering system of FIG. 5; and
FIG. 9 depicts a schematic diagram of an exemplary topology for a measuring device for use in the metering system of FIG. 5.

Where applicable like reference characters designate identical or corresponding components and units throughout the several views, which are not to scale unless otherwise indicated. The embodiments disclosed herein may include elements that appear in one or more of the several views or in combinations of the several views. The invention is as defined in the claims.

### DETAILED DESCRIPTION

The discussion herein describes various embodiments of a metering system. These embodiments may find use in billing applications in which legal metrology standards dictate accuracy and reliability of values for measured parameters because these values may find use to charge customers. Other embodiments and applications are within the scope of the subject matter.

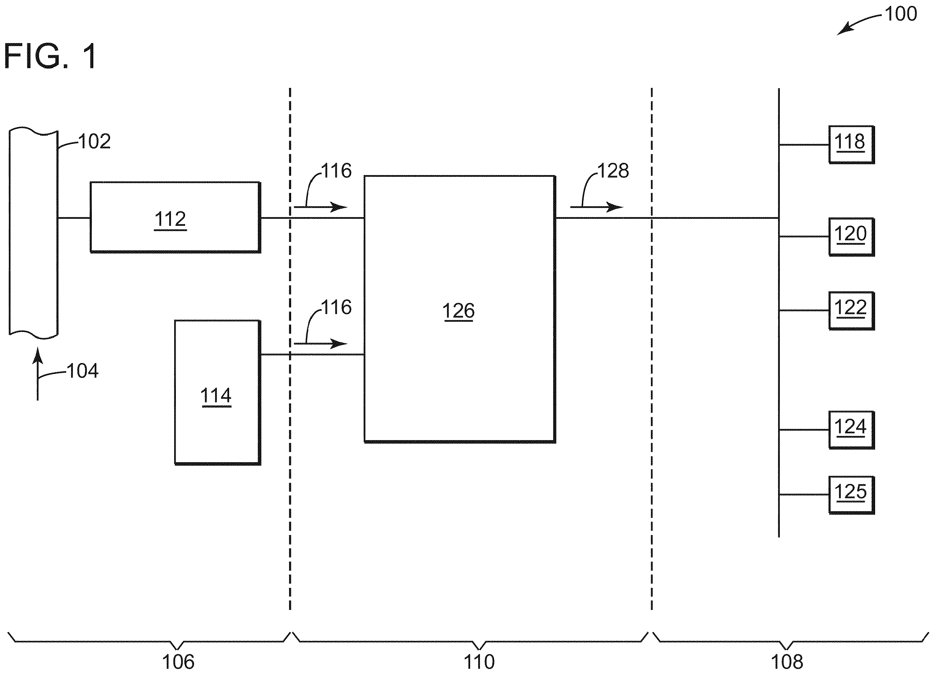

FIG. 1 illustrates a schematic diagram of an exemplary embodiment of a metering system 100. This embodiment may couple with a conduit 102 that carries material 104. Examples of material 104 may include fluids (e.g., liquids and gases), but metering system 100 may also work with solids as well. The metering system 100 may integrate several components (e.g., a first component 106, a second component 108, and a third component 110). The components 106, 108, 110 operate together to convey information that relates to material 104. This information may define measured parameters for material 104, for example, flow rate, volume, and energy; however, this listing of parameters is not exhaustive as relates to applications of the subject matter herein. The first component 106 (also "metrology component 106") may include one or more metrology devices (e.g., a meter device 112 and a measuring device 114) that generate a first signal 116, preferably in digital format. The metrology devices 112, 114 may be configured to comply with legal metrology standards for use in the metering system 100. The second component 108 (also, "peripheral component 108") may include devices that are not subject to any (or limited) regulatory scrutiny or approval. These devices may include a display 118, for example, an alpha-numeric device that can convey a quantified value for the measured parameters. Other devices may include diagnostics 120, a power source 122, a timing unit 124, and a communication device 125, one or more of which can communicate with the components 106, 110 in any given configuration as discussed further below. The third component 110 (also, "processing component 110") can include an accessory 126 that can process the first signal 116 to generate a second signal 128. Examples of the second signal 128 may be in digital or analog formats, as desired. In operation, the accessory 126 may be configured to calculate values using data that originates from the metrology devices 112, 114. These calculated values may account for fluid conditions (e.g., in the metrology device 112) or other functional dynamics and ambient conditions that might otherwise skew data from the metrology devices 112, 114 and, thus, cause errors or anomalies in the measured parameters for material 104.

At a high level, the accessory 126 may also be configured to ensure *in situ* that the metrology devices 112, 114 meet appropriate legal metrology standards. This configuration creates a "modular" structure for the metering system 100. The modular structure may permit the metrology devices 112, 114 to be certified separate from, or independent of, the metering system 100 as a whole, which often occurs at the time of manufacture, assembly, maintenance, or reconfiguration of these systems. In this way, the metrology devices 112, 114 can swap into and out of the metering system 100 in favor of a different device or to add additional devices, as desired. This feature is useful, for example, to remediate, expand, or change functionality of the metering system 100 in the field as well as to simplify manufacture, calibration, and re-calibration of the metering system 100 and its components (e.g. metrology devices 112, 114) to meet specific customer requirements.

Metrology devices 112, 114 can be configured to generate data that is useful to quantify the measured parameters for material 104. These configurations can embody stand-alone devices that couple with the accessory 126. Examples of suitable devices may process analog signals that originate, for example, from sensors that interact with material 104. These processes may result in first signals 116 in digital format. During manufacture, the devices 112, 114 can be tested and certified to meet legal metrology standards prior to use in the metering system 100. The devices 112, 114 may also undergo calibration procedures to store data (e.g., constants, coefficients, etc.) on, for example, storage memory that is resident on the device. This data may relate to analog data (from the sensors) to values that comport with the digital format of the first signals 116 that can transmit to the accessory 126.

The display 118 may be configured to operate in response to second signal 128. These configurations may embody devices that activate to provide visual (or audio) indicators of the values for the measured parameters for material 104. Exemplary devices may reside separate or remote from the accessory 126. But this disclosure does contemplate devices for the display 118 that integrate as part of the accessory 126.

Diagnostics 120 may be configured to monitor operation of the metering system 100. These configurations may embody a separate device, but executable instructions that integrate onto one or more of the metrology devices 112, 114 or accessory 126 may also be useful for this purpose. These embodiments may process data, for example, from the metrology devices 112, 114 or from other sensors and sensing devices. These processes can result in information that the accessory 126 can utilize to identify operating anomalies that might indicate problematic conditions or to operation of the metering system 100. For gas metering applications, diagnostics 120 may monitor differential pressure across the gas meter against threshold criteria to convey information that corresponds with changes in differential pressure to the accessory 126. The accessory 126 may use this information to generate alerts, faults, or other indicators of problems that might require maintenance to occur on the metering system 100.

The other peripheral components 122, 124, 125 may include devices that are useful to operate the metering system 100. The devices may integrate into the metrology devices 112, 114 and the accessory 126 or may embody separate structures that couple variously to components of the metering system 100. The power source 120 may provide electrical power. Batteries may be useful for this purpose. The timing unit 122 may maintain "standard" time to synchronize time, measurements, or calculations on the metering system 100, generally, or on the metrology devices 112, 114 or the accessory 126, individually. The communication device 125 may be configured to convert the second signal 128 from one protocol to another protocol. For example, these configurations may change the second signal 128 to a MODBUS protocol that billing systems can use to accurately associate data from the meter 112 to monetary values that are billed to customers.

The accessory 126 may be configured to process the data from first signals 116. Predominantly, the signals 116 are in digital format. The process may generate values for the measured parameters for material 104. In one implementation, the accessory 126 may operate to vary the format or substance of second signal 128. These formats may be in analog (e.g., 4-20 mA) or digital. In one example, the digital format may embody pulses that reflect the gas volume measured by the meter 112.

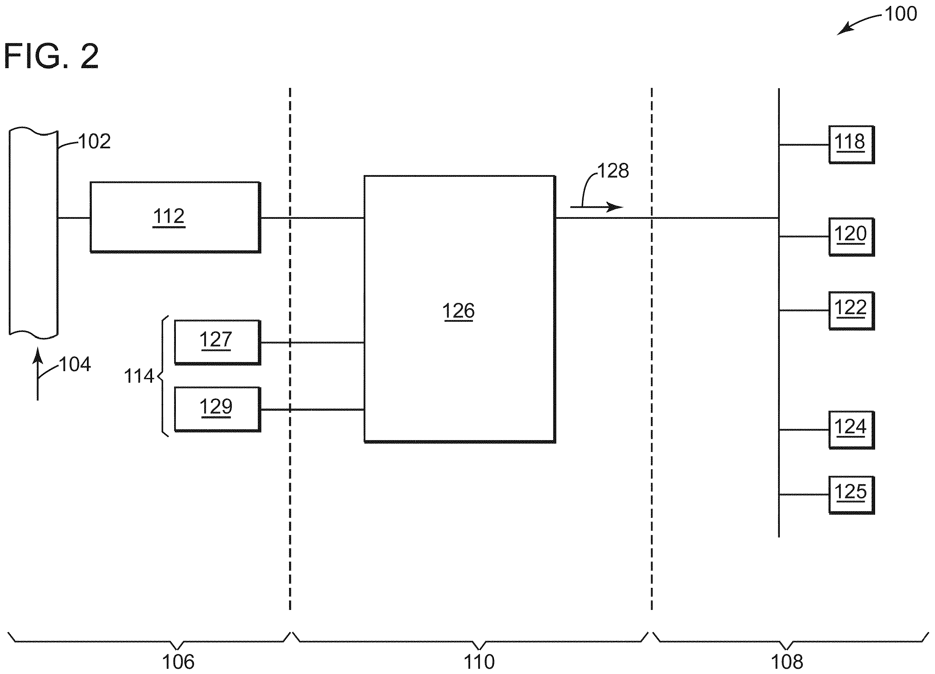

FIG. 2 illustrates a schematic diagram of one configuration for the metering system 100. The measuring device 114 may embody a pair of devices (e.g., a first measuring device 127 and a second measuring device 129). However this disclosure contemplates that the metering system 100 may leverage any number of measuring devices for its operation. The number of measuring devices may depend on particulars of the application for the metering system 100.

The devices 127, 129 can be configured to measure different characteristics and conditions that may be useful to generate the measured parameters. The configurations could provide any variety of data for processing at the accessory 126. For gas metering applications, the meter 112 may embody a gas meter that can generate data that defines a value for flowing volume of material 104. The measuring devices 127, 129 may embody modules that can generate data that defines values for fluid conditions inside of the gas meter. These fluid conditions may include, for example, temperature from measuring device 127 and pressure from measuring device 129. First signals 116 may convey the data from each of the gas meter and modules to the accessory 126 in digital format. The accessory 126 can use the data from the modules to "adjust" or "correct" the flowing volume from the gas meter. These functions account for fluid conditions that prevail in the gas meter. In practice, the modules 127, 129 and the accessory 126 may form "a volume corrector." Second signal 128 can convey a value from the accessory 126 to one or more of the peripherals 118, 120, 122, 124, 125. This value is the result of volume correction at the accessory 126.

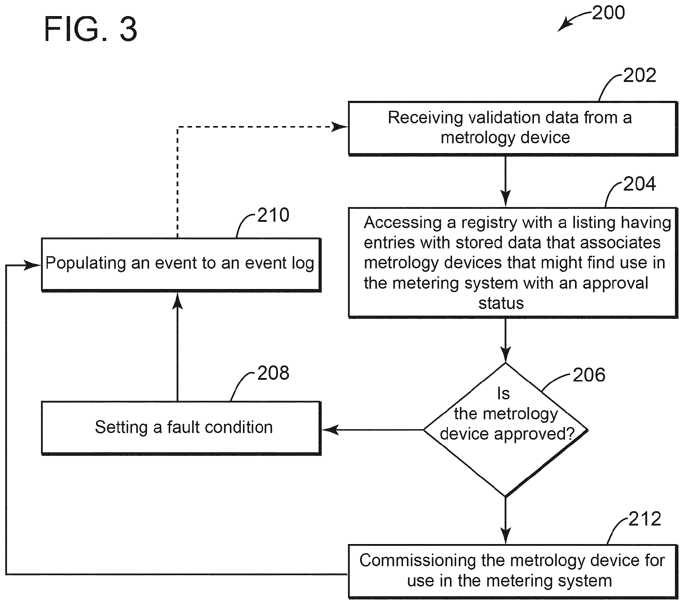

FIG. 3 illustrates a flow diagram of an exemplary embodiment of a method 200 to implement an *in situ* commissioning process for the metrology devices 112, 114. This diagram outlines stages that may embody executable instructions for one or more computer-implemented methods and/or programs. These executable instructions may be stored on the accessory 126 as firmware or software.

Operation of the method 200 may ensure integrity of the metering system 100. The method 200 may include, at stage 202, receiving validation data from a metrology device. The method 200 may also include, at stage 204, accessing a registry with stored data in a listing having entries that associate metrology devices that might find use in the metering system with a regulatory status. The method 200 may further include, at stage 206, comparing the validation data to the stored data in the listing to determine whether the metrology device is approved for use in the metering system. If negative, the method 200 may include, at stage 208, setting a fault condition and, at stage 210, populating an event to an event log. Operation of the method 200 may cease at stage 210, effectively ceasing functioning of the metering system. In one implementation, the method 200 may return to receiving validation data at stage 202. On the other hand, if the metrology device is approved, the method 200 may include, at stage 212, commissioning the metrology device for use in the metering system and, where applicable, populating an event to an event log at stage 210.

At stage 202, the method 200 may receive validation data from the metrology devices 112, 114. The validation data may define or describe information that is unique (as compared to others) to the respective metrology devices 112, 114. Examples of the information may include serial numbers, cyclic redundancy check (CRC) numbers, checksum values, hash sum values, or the like. Other information may define operative conditions or status for the metrology devices 112, 114, for example, calibration data that is stored locally on the device. This information may be stored on the metrology devices 112, 114 at the time of manufacture. In one implementation, the metrology devices 112, 114 may be configured so that all or part of the validation data cannot be changed or modified once manufacture or assembly is complete. This feature may deter tampering to ensure that the metrology devices 112, 114 and the metering system 100, generally, will meet legal and regulatory requirements for purposes of metering of material 104.

At stage 204, the method 200 may access a registry with a listing of stored data that associates metrology devices with a regulatory status. Table 1 below provides an example of this listing.

**Table 1**

| **S/N** | **Device Type** | **Calibration data** | **Firmware data** | **Physical data** | **Regulatory Status** |
|---|---|---|---|---|---|
| 001 | Flow meter | C1 | V1 | P1 | Approved |
| 002 | Measuring | C2 | V2 | P2 | Approved |
| 003 | Measuring | C3 | V3 | P3 | Not Approved |
| 004 | Firmware | C4 | V4 | P4 | Approved |

The listing above may form an "integrity" log that the accessory 126 uses to properly evaluate and integrate the metrology devices 112, 114 into the metering system 100. Stored data in the entries may define various characteristics for metrology devices. As shown above, the listing may have entries for separate metrology devices, often distinguished by identifying information such as serial number (S/N) and device type. The entries may also include operating information that may relate specifically to the metrology device of the entry in the listing. The operating information may include calibration data, for example, values for constants and coefficients, as well as information (e.g., a date, a location, an operator) that describes the status of calibration for the metrology device of the entry in the listing. The operating information may further include firmware data, for example, information that describes the latest version that might be found on the metrology device.

The operating information may provide physical data as relates to operation of the metrology devices 112, 114 in the metering system 100. This physical data may correlate, for example, each metrology device with a "port" or connection on the accessory 126. As also shown, the entries in the listing may include a regulatory status that relates to the metrology device. This regulatory status may reflect that the metrology device is "approved" or "not approved;" however other indicators to convey that the metrology devices 112, 114 may or may not be acceptable for use in the metering system may be useful as well. Approval may indicate compliance with legal metrology standards as well as with appropriate calibration expectations, but this does not always need to be the case.

At stage 206, the method 200 may compare the validation data to the stored data in the listing to determine whether the metrology device is approved for use in the metering system. This stage is useful to certify that the metrology devices 112, 114 are "approved" and meet the necessary legal metrology standards prior to being introduced into the metering system 100. This stage may include one or more stages as necessary so as to properly commission the metrology devices 112, 114. These stages may, for example, include determining whether the metrology device 112, 114 meets certain initial criteria. The initial criteria may distinguish the metrology components by type (e.g., hardware and executable instructions), version or revision, model or serial number, and other functional or physical characteristics. For hardware, the method 200 may also include one or more stages to ensure that the metrology device 112, 114 is located or coupled with the accessory 126 at a location appropriate for its type and functions. The stages may use signals from connectors to discern the location of the hardware on the accessory 126.

The stages may also evaluate the status of the metrology device 112, 114. For hardware, these stages may include stages for identifying calibration data from among the validation data that is received from the metrology component. In one implementation, the method 200 may include stages for confirming that the calibration data has not been corrupted or does not include corrupt information. Corruption might happen, for example, as are result of tampering with the hardware or by exposing the hardware to environmental conditions (e.g., radiation, temperature, etc.). For firmware, the method 200 may use version history and related items that may be useful to distinguish one set of executable instructions from another as well as for purposes of confirming that the set of executable instructions has not been corrupted.

At stage 208, the method 200 may set a fault condition in response to the assessment of the validation data (at stage 206). Examples of the fault condition may take the form of an alert, either audio or visually discernable, or, in some examples, by way of electronic messaging (e.g., email, text message, etc.) that can resolve on a computing device like a smartphone or tablet. In one implementation, the fault condition may interfere with operation of one or more functions on the metering system 100, even ceasing functionality of the whole system if desired. The fault condition may also convey information about the status of the commissioning process. This information may indicate that serial numbers are incorrect or unreadable, that calibration of the metrology device 112, 114 is out of data or corrupted, or that firmware versions and updates on the metrology device are out of date or corrupted.

At stage 210, the method 200 can populate an event to the event log. This event log may reside on the accessory 126 as well as on the metrology devices 112, 114. In one implementation, the event can describe dated records of problems or issues that arise during the commissioning process. The event can also associate data and actions taken (e.g., calibration, updates, etc.) to commission the metrology component for use in the metering system 100. Relevant data may include updated to serial numbers and time stamps (e.g., month, day, year, etc.). The actions may identify an end user (e.g., a technician) and related password that could be required in order to change the configuration or update the metering system 100 with, for example, replacements for the metrology devices 112, 114 or the additional measuring device 126.

At stage 212, the method 200 can commission the metrology device for use in the metering system. This stage may change operation of the accessory 126 to accept or use the metrology component. Changes may update local firmware on the accessory 114; although this may not be necessary for operation of the metering system 100. In one implementation, change in the accessory 126 may update the integrity log to include new entries or to revise existing entries with information about the connected and commissioned metrology devices 112, 114.

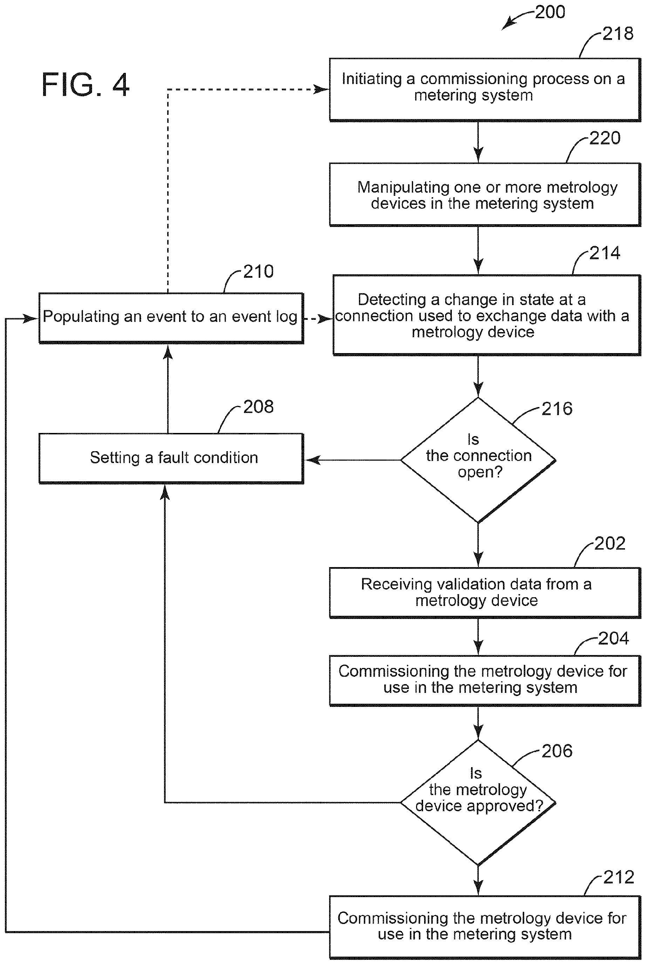

FIG. 4 illustrates a flow diagram of an example of the method 200 of FIG. 3. In this example, the method 200 may include, at stage 214, detecting a change in state at a connection used to exchange data with a metrology device and, at stage 216, determining the state of the connection. If the connection is open, the method 200 may continue, at stage 208, setting the fault connection and, at stage 210, populating an event to an event log. The method 200 may also continue to detect the change at the connection (at stage 214). If the connection is closed, the method 200 may continue, at stage 202, with the *in situ* commissioning process for the metrology device as discussed in connection with FIG. 2 above. In one implementation, the method 200 may include one or more stages that relate to interaction by an end user (e.g., a technician) to perform maintenance, repair, upgrades, assembly or like task to modify structure of a metering system. These stages may include, at stage 218, initiating a commissioning process on the metering system and, at stage 220, manipulating one or more metrology devices on the metering system.

At stage 214, the method 200 detects the change in state at the connection. As noted above, the change may correspond with a signal from a "port" on the accessory 126, possibly a connector or connecting device that the metrology device 112, 114 couples with on the metering system 100. The signal may correspond with a pin on the connector. Values for this signal may correspond with a high voltage and a low or zero voltage, one each to indicate that the pin on the connector is in use or not in use with respect to the connected hardware. The signal could also arise in response to updates in executable instructions on the accessory 126. In one implementation, the method 200 may include one or more stages for initiating a "handshake" in response to the signal. This handshake may cause the accessory 126 to transmit data to the metrology device 112, 114. In return, the metrology device 112, 114 may retrieve and transmit validation data to the accessory 126, as noted herein.

At stage 216, the method 200 determines the state of the connection. This stage may include one or more stages that compare the signal from the port to a look-up table or other threshold that indicates the state of the port. Open ports may indicate that hardware has been removed or is currently unavailable. On the other hand, closed ports may indicate that hardware is available to commence *in situ* commissioning process.

At stage 218, the method 200 initiates the commissioning process on the metering system. This stage may include one or more stages for receiving an input. Examples of the input may arise automatically, for example, based on a timer or other component internal to the accessory 126 that automatically polls the metrology devices 112, 114. In one implementation, the input may arise externally from a remote device (e.g., computer, laptop, tablet, smartphone) that connects with the metering system 100. This input may correspond with a technician plugging or unplugging one or more of the metrology devices 112, 114 from the accessory 126 (at stage 220). The external input may be necessary to allow the metering system to operate with any new or different devices 112, 114. Data of the input may include a user name and password. In one example, the method 200 may include stages to create an event (at stage 212) that corresponds with the manipulation of the devices 112, 114.

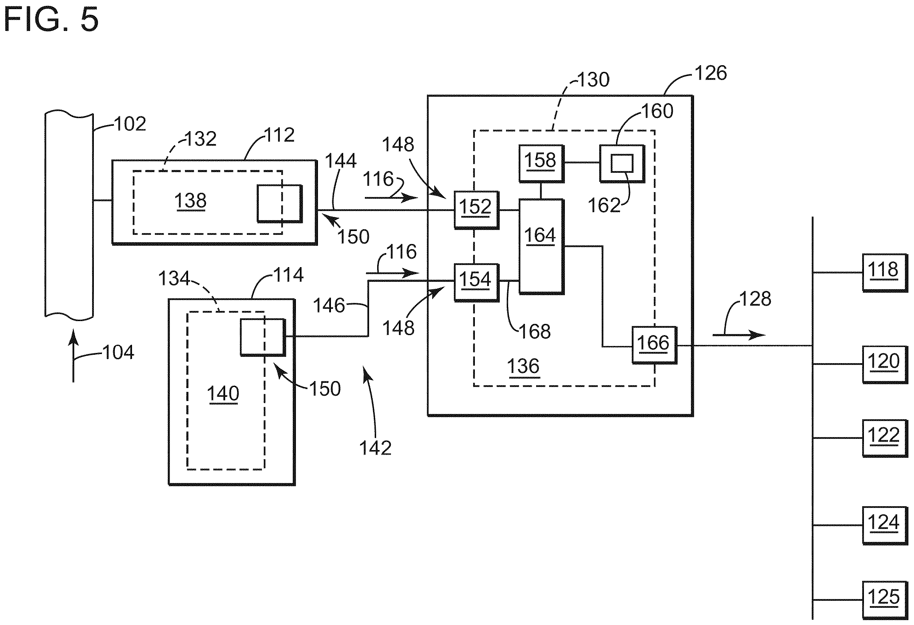

FIG. 5 depicts as a schematic diagram of an example of base-level topology for components in the metering system 100. This topology may utilize one or more operative circuit boards (e.g., a first circuit board 130, a second circuit board 132, and a third circuit board 134), each with circuitry (e.g., first circuitry 136, second circuitry 138, and third circuitry 140). A communication interface 142 may be useful to allow circuitry 136, 138, 140 to exchange the first signals 116. The communication interface 142 may include a cable assembly with cables (e.g., a first cable 144 and a second cable 146) that extend between circuit boards 130, 132, and 130, 134, respectively. Construction of the cables 144, 146 may comprise one or more combinations of conductive wires to conduct the first signals 116 between the circuitry 136, 138, 140. The cables 144, 146 may have ends (e.g., a first end 148 and a second end 150) that are configured to interface with circuit boards 130, 132, 134. For example, at the first end 144, the cables 140, 142 may include one or more connectors (e.g., a first connector 152 and a second connector 154). The connectors 152, 154 can interface with complimentary connectors on the accessory circuit board 130. This feature can permit the metrology devices 112, 114 to be "replaceable" or "swappable," e.g., to connect with the accessory circuit board 130 to expand or modify functionality of the metering system 100. The second end 150 of the cables 144, 146 may integrate onto the circuit boards 132, 134, by way of, for example, direct solder, wire-bonding, or similar technique. However, it is possible that the cables 144, 146 may also include connectors (the same and/or similar to connectors 152, 154) to also provide releaseable engagement of the cables 144, 146 with the circuit boards 132, 134.

The circuit boards 128, 130, 132 can be configured with topology that uses discrete electrical components to facilitate operation of the system 102. This topology can include a substrate, preferably one or more printed circuit boards (PCB) of varying designs, although flexible printed circuit boards, flexible circuits, ceramic-based substrates, and silicon-based substrates may also suffice. For purposes of example, a collection of discrete electrical components may be disposed on the substrate to embody the functions of circuitry 136, 138, 140. Examples of discrete electrical components include transistors, resistors, and capacitors, as well as more complex analog and digital processing components (e.g., processors, storage memory, converters, etc.). This disclosure does not, however, foreclose use of solid-state devices and semiconductor devices, as well as full-function chips or chip-on-chip, chip-on-board, system-on chip, and like designs or technology known now or developed in the future.

Referring back to FIG. 5, topology for the accessory circuit board 130 can be configured to perform functions for the *in situ* commissioning processes discussed above. First circuitry 136 may include various components including a processor 158, which can be fully-integrated with processing and memory necessary to perform operations or coupled separately with a storage memory 160 that retains data 162. Examples of the data 162 can include executable instructions (e.g., firmware, software, computer programs, etc.) and information including the integrity log and event logs. In one implementation, first circuitry 136 may include driver circuitry 164 that couples with the processor 158. The driver circuitry 164 may be configured to facilitate component-to-component communication, shown in this example as operatively coupled with the connectors 152, 154 and with an input/output 166 that communicates with the peripheral devices (e.g., the display 118, the power supply 120, the timing unit 122, and diagnostics 124. The input/output 166 may be configured to accommodate signals (e.g., the signal 128) in digital or analog format, for example, to transmit (or receive) data by way of wired or wireless protocols. MODBUS, PROFIBUSS, and like protocols are often used use with automation technology and may comport with operation herein. Internally, circuitry 136 may include a bus 168 may be useful to exchange signals among the components 152, 154, 158, 160, 164. The bus 168 may utilize standard and proprietary communication busses including SPI, I²C, UNI/O, 1-Wire, or one or more like serial computer busses known at the time of the present writing or developed hereinafter.

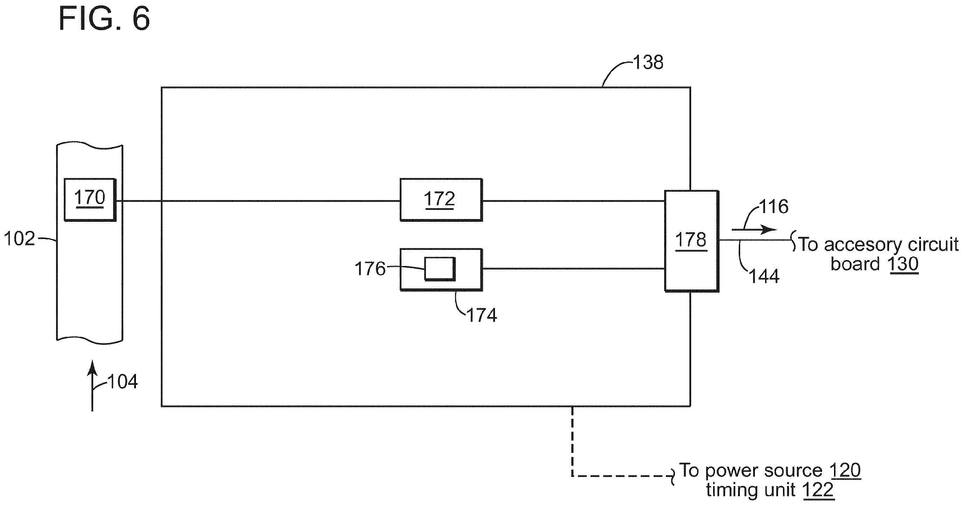

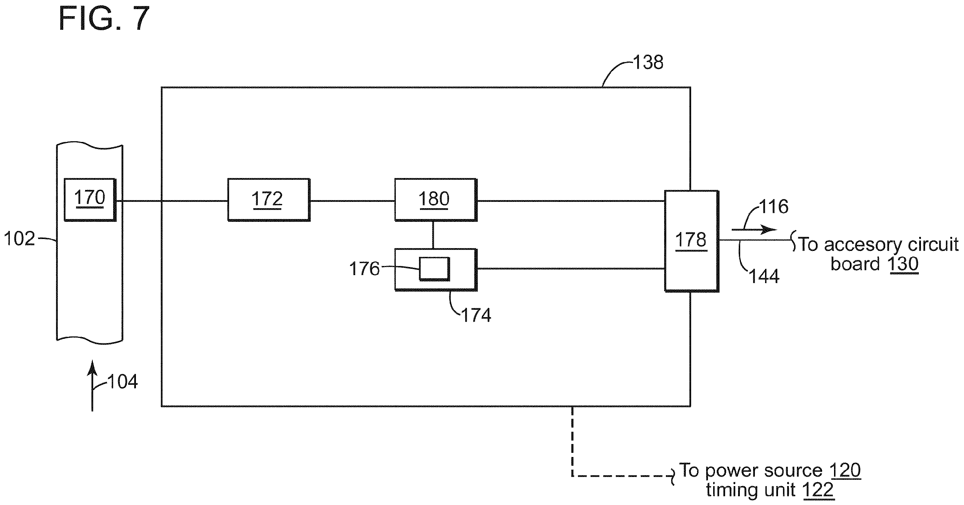

FIGS. 6 and 7 illustrate schematic diagrams of topology for second circuitry 138 that might find use as part of the meter 112. As shown in FIG. 6, this topology may include a first sensor 170 that interacts with material 104 to generate data. Examples of the first sensor 170 may comprise solid-state sensing devices, MEMS-based thermal or pressure sensitive devices, or devices with mechanically-integrated elements (e.g., impellers, diaphragms, etc.). These devices can generate an output to second circuitry 138. In one implementation, second circuitry 138 may include a signal converter 172, possibly an analog-to-digital converter to convert the output from analog format to digital format for use as the first signal 116. Second circuitry 138 may also include a storage memory 174 that retains data 176. In one implementation, second circuitry 138 may leverage a connector 178 to couple one or both of the signal converter 172 and the storage memory 174 with the cable 144 that is used to convey signal 116 to the accessory circuit board 130. In FIG. 7, second circuitry 138 may also include a processor 180 that couples with one or more the signal converter 172 and the storage memory 174.

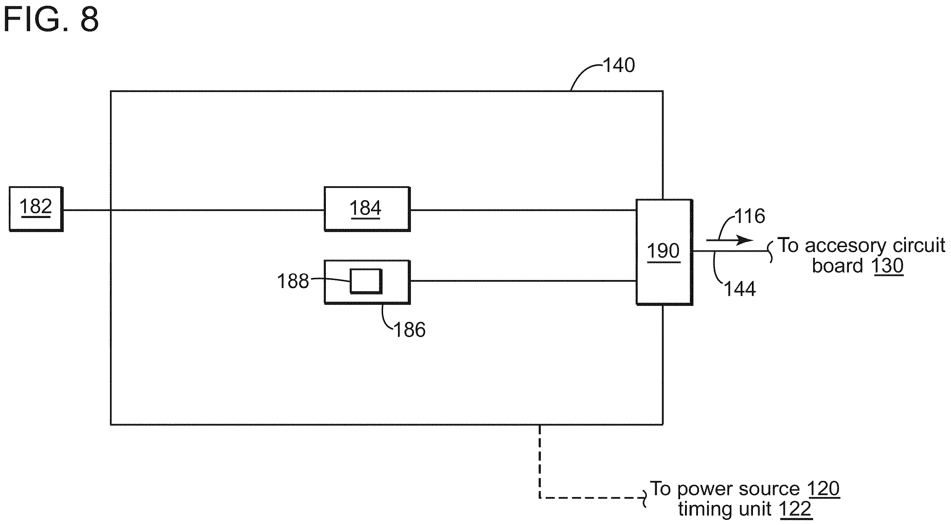

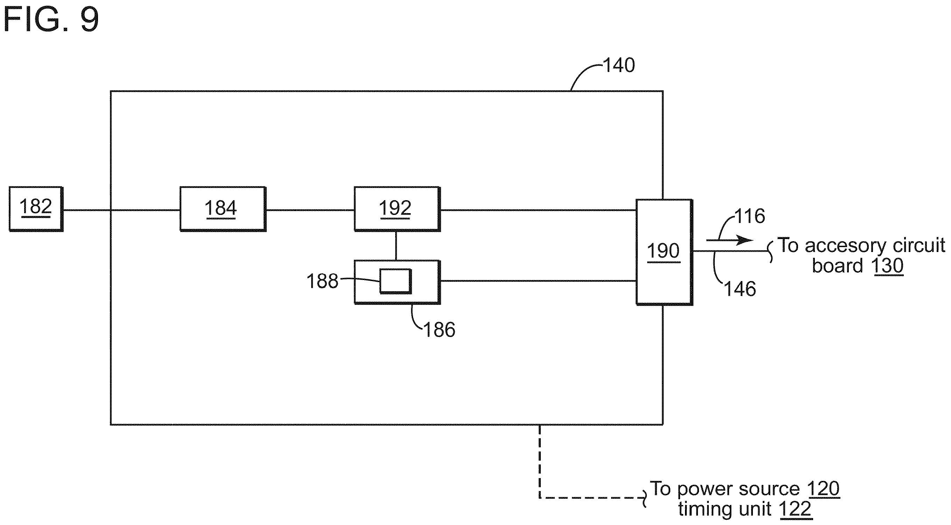

FIGS. 8 and 9 illustrate schematic diagrams for topology for third circuitry 140 that might find use as part of the measuring device 114. As shown in FIG. 8, this topology may include a second sensor 182 that may be configured to generate data for use at the accessory circuit board 130 to calculate the measured parameters of material 104 (FIG. 4). The data may reflect operating conditions (e.g., temperature, pressure, relative humidity, etc.) specific to material 104 (FIG. 4) or environment in proximity to the metering system 100. The second sensor 182 may generate an output to third circuitry 140. In one implementation, third circuitry 140 may include a signal converter 184, possibly an analog-to-digital converter to convert the output from analog format to digital format for use as the first signal 116. Third circuitry 140 may also include a storage memory 186 that retains data 188. In one implementation, third circuitry 140 may leverage a connector 190 to couple one or both of the signal converter 184 and the storage memory 186 with the cable 146 that is used to convey signal 116 to the accessory circuit board 130. In FIG. 9, third circuitry 140 may also include a processor 192 that couples with one or more the signal converter 184 and the storage memory 186.

Data 162, 176, 188 may include stored data that relates to operation of the respective devices 112, 114. Examples of stored data may define or describe entries in the integrity log (discussed above), passwords, names of operators, measurement results, and events in the event log (discussed above). In one implementation, these events may also include data that relates to operation of the respective device as part of the metering system 100. Such events may indicate, for example, missing measurement data, measurements are occurring out of range, that calibration constants are corrupted, and the like. The data 162 can also include executable instructions in the form of firmware, software, and computer programs that can configure the processors 158, 180, 192 to perform certain functions. However, while information and executable instructions may be stored locally as data 162, 176, 188, these devices may also be configured to access this information and executable instruction in a remote location, e.g., storage in the "cloud."

One or more of the stages of the methods can be coded as one or more executable instructions (e.g., hardware, firmware, software, software programs, etc.). These executable instructions can be part of a computer-implemented method and/or program, which can be executed by a processor and/or processing device. The processor may be configured to execute these executable instructions, as well as to process inputs and to generate outputs, as set forth herein.

Computing components (e.g., memory and processor) can embody hardware that incorporates with other hardware (e.g., circuitry) to form a unitary and/or monolithic unit devised to execute computer programs and/or executable instructions (e.g., in the form of firmware and software). As noted herein, exemplary circuits of this type include discrete elements such as resistors, transistors, diodes, switches, and capacitors. Examples of a processor include microprocessors and other logic devices such as field programmable gate arrays ("FPGAs") and application specific integrated circuits ("ASICs"). Memory includes volatile and non-volatile memory and can store executable instructions in the form of and/or including software (or firmware) instructions and configuration settings. Although all of the discrete elements, circuits, and devices function individually in a manner that is generally understood by those artisans that have ordinary skill in the electrical arts, it is their combination and integration into functional electrical groups and circuits that generally provide for the concepts that are disclosed and described herein.

As used herein, an element or function recited in the singular and proceeded with the word "a" or "an" should be understood as not excluding plural said elements or functions, unless such exclusion is explicitly recited. Furthermore, references to "one embodiment" of the claimed invention should not be interpreted as excluding the existence of additional embodiments that also incorporate the recited features.

This written description uses examples to disclose the invention, including the best mode, and also to enable any person skilled in the art to practice the invention, including making and using any devices or systems and performing any incorporated methods. The patentable scope of the invention is defined by the claims. Other examples may occur to those skilled in the art. Such other examples may have structural elements that do not differ from the literal language of the claims, or may include equivalent structural elements with insubstantial differences from the literal language of the claims.

In light of the foregoing discussion, the embodiments herein incorporate improvements to equip metering systems to perform *in situ* commissioning of components. A technical effect is to modularize metering systems so as to easily expand and change functionalities, while at the same time maintaining legal and regulatory compliance.

## Claims

1. A metering system (100), comprising:
one or more metrology devices (112, 114) configured to generate a first signal (116) in digital format that relates to an analog signal that conveys information about material (104) in a conduit (102) and the one or more metrology devices (112,114) further configured to supply validation data (176, 188); and
an accessory (126) coupled with the one or more metrology devices (112, 114), the accessory (126) configured to use the information of the first signal (116) to generate a second signal (128), the second signal (128) conveying information that defines a measured parameter for the material (104);
wherein the accessory (126) comprises executable instructions
wherein the executable instructions configure the accessory (126) to exchange information with the one or more metrology devices (112, 114) and
to compare the information of the first signal (116) and/or the validation data to a listing of stored data, entries on the list having a value that indicates whether a metrology device identified in the entry is approved or disapproved for use in said metering system based on independent testing and certification of the one or more metrology devices (112,114) done prior to use in said metering system, and
to complete a handshake between the metrology device and the accessory.

2. The metering system (100) of claim 1, wherein the one or more metrology devices (112, 114) comprises storage memory (174, 186) and validation data (176, 188) that is stored on the storage memory (174, 186) at the time of manufacture.

3. The metering system (100) of any preceding claim, wherein the executable instructions configure the accessory (126) to set a fault condition based on the comparison of the validation data to the listing of stored data.

4. The metering system (100) of any preceding claim, wherein the executable instructions configure the accessory (126) to use the information to confirm a calibration date for the one or more metrology devices (112, 114).

5. The metering system (100) of any preceding claim, wherein the executable instructions configure the accessory (126) to use the information to confirm calibration data is not corrupted.

6. The metering system (100) of any preceding claim, wherein the executable instructions configure the accessory (126) to populate an event to an event log.

7. The metering system (100) of any preceding claim, wherein the one or more metrology devices (112, 114) comprise a gas meter, wherein the data defines a value for volume of the material, and wherein the executable instructions configure the accessory to calculate a value for the measured parameter using data that originates at the one or more metrology devices (112, 114) and is transmitted via the first signal (116).

8. The metering system (100) of claim 7, wherein the metrology device (112, 114) comprises a first measuring device (127) and a second measuring device (129), each having a sensor (170) responsive to a first fluid condition and a second fluid condition in the gas meter, respectively, and wherein the executable instructions configure the accessory (126) to calculate the value for a measured parameter using data that originates at the first measuring device (127) and the second measuring device (129).

9. The metering system (100) of any preceding claim, wherein the accessory (126), comprises:
a circuit board (130) with a processor (158), storage memory (160), and executable instructions stored on the storage memory (160), wherein the executable instructions configure the processor for,
receiving (202) validation data from a metrology device in a first signal in digital format, the validation data stored during manufacture of the metrology device (112, 114); and
using (204, 206, 212) the validation data to verify that a metrology device (112, 114) identified in the entry is approved for use in said metering system based on independent testing and certification of the one or more metrology devices (112, 114) done prior to use in said metering system.

10. The metering system (100) of claim 9, wherein the executable instructions configure the processor for,
accessing a registry with a listing of stored data that defines the regulatory status for a plurality of the metrology devices;
comparing the validation data to the stored data in the listing; and
selecting an entry from the listing with stored data that matches the validation data.

11. The metering system (100) of claim 9 or claim 10, wherein the executable instructions configure the processor for,
populating an event to an event log that describes dated records of actions that occur on the printed circuit board.

12. A method, comprising:
initiating a commissioning process on the metering system according to any of the claims 1 to 11;
unplugging a first measuring device from the metering system; and
plugging a second measuring device to the metering system;
wherein the commissioning process includes carrying out instructions within the accessory (126) to exchange information with the second metrology device, and to use validation data received from the second measuring device to compare to a listing of stored data and based on this comparison determine if the second measuring device is approved or disapproved for use in the metering system based on independent testing and certification of the second metrology device done prior to use in said metering system, and to complete a handshake between the second metrology device and the accessory.

13. The method of claim 12, wherein the commission process starts in response to a change of state at a connector that receives one or more of the first measuring device and the second measuring device.

14. The method of claim 12 or claim 13, further comprising:
receiving an input from an end user, wherein the commissioning process requires the input to operate the metering system with the second measuring device.

## Patentansprüche

1. Ein Messsystem (100), umfassend:
eines oder mehrere Messvorrichtungen (112, 114), die konfiguriert sind, um ein erstes Signal (116) im digitalen Format zu erzeugen, das sich auf ein analoges Signal bezieht, das Informationen über Material (104) in einer Leitung (102) und die eine oder mehrere Messvorrichtungen (112, 114) weiter konfiguriert sind, um Validierungsdaten (176, 188) zu liefern; und
ein Zubehör (126), das mit dem einen oder den mehreren Messvorrichtungen (112, 114) gekoppelt ist, das Zubehör (126) konfiguriert ist, um die Information des ersten Signals (116) zu verwenden, um ein zweites Signal (128) zu erzeugen, wobei das zweite Signal (128) Informationen überträgt, die einen gemessenen Parameter für das Material (104) definiert;
wobei das Zubehör (126) ausführbare Anweisungen umfasst
wobei die ausführbaren Anweisungen das Zubehör (126) konfigurieren, um Informationen mit dem einen oder den mehreren Messvorrichtungen (112, 114) auszutauschen und
um die Informationen des ersten Signals (116) und/oder die Validierungsdaten mit einer Auflistung gespeicherter Daten zu vergleichen, wobei die Einträge in der Liste einen Wert aufweisen, der angibt, ob eine Messvorrichtung, die in dem Eintrag identifiziert wird, für die Verwendung in jenem Messsystem zugelassen oder nicht zugelassen ist, basierend auf einer unabhängigen Prüfung und Zertifizierung des einen oder der mehreren Messgeräte (112, 114), die vor der Verwendung in jenem Messsystem durchgeführt wurde, und
einen Handshake zwischen der Messvorrichtung und dem Zubehör abzuschließen.

2. Das Messsystem (100) gemäß Anspruch 1, wobei das eine oder die mehreren Messvorrichtungen (112, 114) einen Speicher (174, 186) und Validierungsdaten (176, 188) aufweisen, die zum Zeitpunkt der Herstellung auf dem Speicher (174, 186) gespeichert sind.

3. Das Messsystem (100) gemäß einem der vorhergehenden Ansprüche, wobei die ausführbaren Anweisungen das Zubehör (126) konfigurieren, um eine Fehlerbedingung basierend auf dem Vergleich der Validierungsdaten mit der Auflistung der gespeicherten Daten aufzusetzen.

4. Das Messsystem (100) gemäß einem der vorhergehenden Ansprüche, wobei die ausführbaren Anweisungen das Zubehör (126) konfigurieren, um die Informationen zu verwenden, um ein Kalibrierungsdatum für das eine oder die mehreren Messvorrichtungen (112, 114) zu bestätigen.

5. Das Messsystem (100) gemäß einem der vorhergehenden Ansprüche, wobei die ausführbaren Anweisungen das Zubehör (126) konfigurieren, um die Informationen zu verwenden, um zu bestätigen, dass die Kalibrierungs-Daten nicht verfälscht sind.

6. Das Messsystem (100) gemäß einem der vorhergehenden Ansprüche, wobei die ausführbaren Anweisungen das Zubehör (126) konfigurieren, um ein Ereignis in ein Ereignisprotokolleinzutragen.

7. Das Messsystem (100) gemäß einem der vorhergehenden Ansprüche, wobei das eine oder die mehreren Messvorrichtungen (112, 114) einen Gaszähler umfassen, wobei die Daten einen Wert für das Volumen des Materials definieren, und wobei die ausführbaren Anweisungen das Zusatzgerät so konfigurieren, dass es einen Wert für den gemessenen Parameter unter Verwendung von Daten berechnet, die von der einen oder den mehreren Messvorrichtungen (112, 114) stammen und über das erste Signal (116) übertragen werden.

8. Das Messsystem (100) gemäß Anspruch 7, wobei die Messvorrichtung (112, 114) eine erste Messvorrichtung (127) und eine zweite Messvorrichtung (129) umfasst, die jeweils einen Sensor (170) aufweisen, der auf einen ersten Fluidzustand bzw. einen zweiten Fluidzustand in dem Gaszähler anspricht, und wobei die ausführbaren Anweisungen das Zubehör (126) konfigurieren, um den Wert für einen gemessenen Parameter unter Verwendung von Daten zu berechnen, die von der ersten Messvorrichtung (127) und der zweiten Messvorrichtung (129) stammen.

9. Das Messsystem (100) gemäß einem der vorhergehenden Ansprüche, wobei das Zubehör (126) umfasst
eine Leiterplatte (130) mit einem Prozessor (158), einen Speicher (160) und ausführbare Anweisungen, die auf dem Speicher (160) gespeichert sind, wobei die ausführbaren Anweisungen den Prozessor konfigurieren für,
das Empfangen (202) von Validierungsdaten von einer Messvorrichtung in einem ersten Signal im digitalen Format, wobei die Validierungsdaten während der Herstellung der Messvorrichtung (112, 114) gespeichert werden; und
das Verwenden (204, 206, 212) der Validierungsdaten, um zu verifizieren, dass eine Messvorrichtung (112, 114), die in der Eingabe identifiziert wurde, zur Verwendung in jenem Messsystem zugelassen ist, basierend auf der unabhängigen Testung und Zertifizierung der einen oder der mehreren Messvorrichtungen (112, 114), die vor der Verwendung in jenem Messsystem durchgeführt wurde.

10. Das Messsystem (100) gemäß Anspruch 9, wobei die ausführbaren Anweisungen den Prozessor konfigurieren für,
das Zugreifen auf ein Register mit einer Auflistung gespeicherter Daten, die den Zulassungsstatus für eine Vielzahl der Messvorrichtungen definieren;
das Vergleichen der Validierungsdaten mit den gespeicherten Daten in der Auflistung; und
das Auswählen eines Eintrags aus der Auflistung mit gespeicherten Daten, der mit den Validierungsdaten übereinstimmt.

11. Das Messsystem (100) gemäß Anspruch 9 oder Anspruch 10, wobei die ausführbaren Anweisungen den Prozessor konfigurieren für,
das Eintragen eines Ereignisses in ein Ereignisprotokoll, das datierte Aufzeichnungen von Aktionen beschreibt, die auf der gedruckten Leiterplatte auftreten.

12. Ein Verfahren, umfassend:
Einleiten eines Inbetriebnahme-Vorgangs am Messsystem gemäß einem der Ansprüche 1 bis 11;
Trennen einer ersten Messvorrichtung von dem Messsystem; und
Einstecken einer zweiten Messeinrichtung an das Messsystem;
wobei der Inbetriebnahme-Vorgang das Ausführen von Anweisungen innerhalb des Zubehörs (126) beinhaltet, um Informationen mit der zweiten Messvorrichtung auszutauschen und die von der zweiten Messvorrichtung empfangenen Validierungsdaten mit einer Auflistung von der Messvorrichtung empfangenen Validierungsdaten mit einer Auflistung gespeicherter Daten zu vergleichen und auf der Grundlage dieses Vergleichs zu bestimmen, ob die zweite Messvorrichtung für die Verwendung in dem Messsystem zugelassen oder nicht zugelassen ist,
basierend auf einer unabhängigen Prüfung und Zertifizierung der zweiten Messvorrichtung, die vor der Verwendung in jenem Messsystem durchgeführt wurde, und um einen Handshake zwischen der zweiten Messvorrichtung und dem Zubehör abzuschließen.

13. Das Verfahren gemäß Anspruch 12, wobei der Inbetriebnahme-Vorgang in Reaktion auf eine Zustandsänderung an einem Verbinder beginnt, der eine oder mehrere der ersten Messvorrichtung und der zweiten Messvorrichtung aufnimmt.

14. Das Verfahren gemäß Anspruch 12 oder Anspruch 13, ferner umfassend:
Empfangen einer Eingabe eines Endbenutzers, wobei der Inbetriebnahme-Vorgang die Eingabe erfordert, um das Messsystem mit der zweiten Messvorrichtung zu betreiben.

## Revendications

1. Système de dosage (100), comprenant :
un ou plusieurs dispositifs de métrologie (112, 114) configurés de façon à générer un premier signal (116) sous un format numérique, qui est associé à un signal analogique qui porte une information concernant un matériau (104) dans un conduit (102), et les dispositifs de métrologie au nombre d'un ou de plusieurs (112, 114) étant de plus configurés de façon à délivrer des données de validation (176, 188) ; et
un accessoire (126) couplé aux dispositifs de métrologie au nombre d'un ou de plusieurs (112, 114), l'accessoire (126) étant configuré de façon à utiliser l'information du premier signal (116) de façon à générer un deuxième signal (128), le deuxième signal (128) portant une information qui définit un paramètre mesuré pour le matériau (104) ;
dans lequel l'accessoire (126) comprend des instructions exécutables ;
dans lequel les instructions exécutables configurent l'accessoire (126) de façon à échanger une information avec les dispositifs de métrologie au nombre d'un ou de plusieurs (112, 114), et
de façon à comparer l'information du premier signal (116) et/ou les données de validation à une liste de données mémorisées, des entrées sur la liste ayant une valeur qui indique si un dispositif de métrologie identifié dans l'entrée est approuvé ou désapprouvé pour l'utilisation dans ledit système de dosage en fonction d'un test et d'une certification indépendants des dispositifs de métrologie au nombre d'un ou de plusieurs (112, 114) effectués avant l'utilisation dans ledit système de dosage, et
de façon à effectuer un établissement de liaison entre le dispositif de métrologie et l'accessoire.

2. Système de dosage (100) selon la revendication 1, dans lequel les dispositifs de métrologie au nombre d'un ou de plusieurs (112, 114) comprennent une mémoire de stockage (174, 186) et des données de validation (176, 188) qui sont mémorisées sur la mémoire de stockage (174, 186) au moment de la fabrication.

3. Système de dosage (100) selon l'une quelconque des revendications précédentes, dans lequel les instructions exécutables configurent l'accessoire (126) de façon à établir une condition de défaut en fonction de la comparaison des données de validation à la liste de données mémorisées.

4. Système de dosage (100) selon l'une quelconque des revendications précédentes, dans lequel les instructions exécutables configurent l'accessoire (126) de façon à utiliser l'information pour confirmer une date de calibration pour les dispositifs de métrologie au nombre d'un ou de plusieurs (112, 114).

5. Système de dosage (100) selon l'une quelconque des revendications précédentes, dans lequel les instructions exécutables configurent l'accessoire (126) de façon à utiliser l'information pour confirmer que les données de calibration ne sont pas corrompues.

6. Système de dosage (100) selon l'une quelconque des revendications précédentes, dans lequel les instructions exécutables configurent l'accessoire (126) de façon à peupler avec un événement un journal d'événements.

7. Système de dosage (100) selon l'une quelconque des revendications précédentes, dans lequel les dispositifs de métrologie au nombre d'un ou de plusieurs (112, 114) comprennent un dispositif de mesure de gaz, les données définissant une valeur pour le volume de matériau, et les instructions exécutables configurant l'accessoire de façon à calculer une valeur pour les paramètres mesurés à l'aide de données qui ont pour origine les dispositifs de métrologie au nombre d'un ou de plusieurs (112, 114) et qui sont transmises par l'intermédiaire du premier signal (116).

8. Système de dosage (100) selon la revendication 7, dans lequel le dispositif de métrologie (112, 114) comprend un premier dispositif de mesure (127) et un deuxième dispositif de mesure (129), comportant chacun un capteur (170) réagissant à une première condition de fluide et à une deuxième condition de fluide dans le dispositif de mesure de gaz, respectivement, et dans lequel les instructions exécutables configurent l'accessoire (126) de façon à calculer la valeur pour un paramètre mesuré à l'aide de données qui ont pour origine le premier dispositif de mesure (127) et le deuxième dispositif de mesure (129).

9. Système de dosage (100) selon l'une quelconque des revendications précédentes, dans lequel l'accessoire (126) comprend :
une carte de circuits (130) avec un processeur (158), une mémoire de stockage (160), et des instructions exécutables mémorisées sur la mémoire de stockage (160), les instructions exécutables configurant le processeur de façon à :
recevoir (202) des données de validation à partir d'un dispositif de métrologie dans un premier signal sous un format numérique, les données de validation étant mémorisées durant la fabrication du dispositif de métrologie (112, 114) ; et
utiliser (204, 206, 212) les données de validation de façon à vérifier qu'un dispositif de métrologie (112, 114) identifié dans l'entrée est approuvé pour l'utilisation dans ledit système de dosage en fonction d'un test et d'une certification indépendants des dispositifs de métrologie au nombre d'un ou de plusieurs (112, 114) effectués avant l'utilisation dans ledit système de dosage.

10. Système de dosage (100) selon la revendication 9, dans lequel les instructions exécutables configurent le processeur de façon à :
accéder à un registre avec une liste de données mémorisées qui définissent le statut réglementaire pour une pluralité des dispositifs de métrologie ;
comparer les données de validation aux données mémorisées dans la liste ; et
sélectionner une entrée à partir de la liste à des données mémorisées qui correspondent aux données de validation.

11. Système de dosage (100) selon la revendication 9 ou la revendication 10, dans lequel les instructions exécutables configurent le processeur de façon à :
peupler avec un événement un journal d'événements qui décrit des enregistrements datés d'actions qui se produisent sur la carte de circuits imprimés.

12. Procédé, comprenant :
le déclenchement d'un processus de mise en service sur le système de dosage selon l'une quelconque des revendications 1 à 11 ;
le débranchement d'un premier dispositif de mesure à partir du système de dosage ; et
le branchement d'un deuxième dispositif de mesure sur le système de dosage ;
dans lequel le processus de mise en service comprend la réalisation d'instructions à l'intérieur de l'accessoire (126) de façon à échanger une information avec le deuxième dispositif de métrologie, et à utiliser des données de validation reçues à partir du deuxième dispositif de mesure de façon à les comparer à une liste de données mémorisées, et, en fonction de cette comparaison, à déterminer si le deuxième dispositif de mesure est approuvé ou désapprouvé pour l'utilisation dans le système de dosage en fonction d'un test et d'une certification indépendants du deuxième dispositif de métrologie effectués avant l'utilisation dans ledit système de dosage, et à effectuer un établissement de liaison entre le deuxième dispositif de métrologie et l'accessoire.

13. Procédé selon la revendication 12, dans lequel le processus de mise en service démarre en réponse à un changement d'état au niveau d'un connecteur qui reçoit l'un ou plusieurs du premier dispositif de mesure et du deuxième dispositif de mesure.

14. Procédé selon la revendication 12 ou la revendication 13, comprenant de plus :
la réception d'une entrée à partir d'un utilisateur final, le processus de mise en service nécessitant que l'entrée fasse fonctionner le système de dosage avec le deuxième dispositif de mesure.
